(19) Europäisches Patentamt
European Patent Office
Office européen des brevets

(11) **EP 3 200 948 B1**

(12) **EUROPEAN PATENT SPECIFICATION**

(45) Date of publication and mention
of the grant of the patent:
**15.09.2021 Bulletin 2021/37**

(21) Application number: **15778545.2**

(22) Date of filing: **30.09.2015**

(51) Int Cl.:
***B23F 5/16*** *(2006.01)*       ***B23F 21/12*** *(2006.01)*
***B23F 21/16*** *(2006.01)*      ***B23F 21/24*** *(2006.01)*
***B23F 21/26*** *(2006.01)*

(86) International application number:
**PCT/US2015/053111**

(87) International publication number:
**WO 2016/054146 (07.04.2016 Gazette 2016/14)**

(54) **AXIAL HOB WITH MULTI-REVOLUTION CUTTING TEETH AND METHOD OF MANUFACTURING A GEAR WITH AN AXIAL HOB**

AXIALER WALZFRÄSER MIT SCHNEIDZÄHNEN MIT MEHRFACHUMDREHUNG UND VERFAHREN ZUR HERSTELLUNG EINES ZAHNRADS MITTELS EINES WALZFRÄSERS

FRAISE-MÈRE COMPRENANT DES DENTS DE COUPE MULTI-TOURS ET PROCÉDÉ DE FABRICATION D'UN ENGRENAGE EN UTILISANT UNE FRAISE-MÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2014 US 201462058719 P**

(43) Date of publication of application:
**09.08.2017 Bulletin 2017/32**

(73) Proprietor: **The Gleason Works**
**Rochester, NY 14692-2970 (US)**

(72) Inventors:
• **MATSUBARA, Takahiro**
**Tokyo 168-0062 (JP)**

• **STADTFELD, Hermann, J.**
**Webster, NY 14580 (US)**

(74) Representative: **Leinweber & Zimmermann**
**Patentanwalts-PartG mbB**
**European Patent Attorneys**
**Viktualienmarkt 8**
**80331 München (DE)**

(56) References cited:
**US-A1- 2002 015 622     US-A1- 2012 207 553**
**US-A1- 2013 309 026**

## Description

Field of the Invention

The invention relates to a cutting tool having teeth that are arranged around a cylinder in a helical pattern. The cutting front is perpendicular to the helix. In particular, the invention relates to an axial hob according to the preamble of independent claim 1, which is known from document US 2013/0309026 A1, and a method of manufacturing a gear from a gear workpiece with such an axial hob.

Background of the Invention

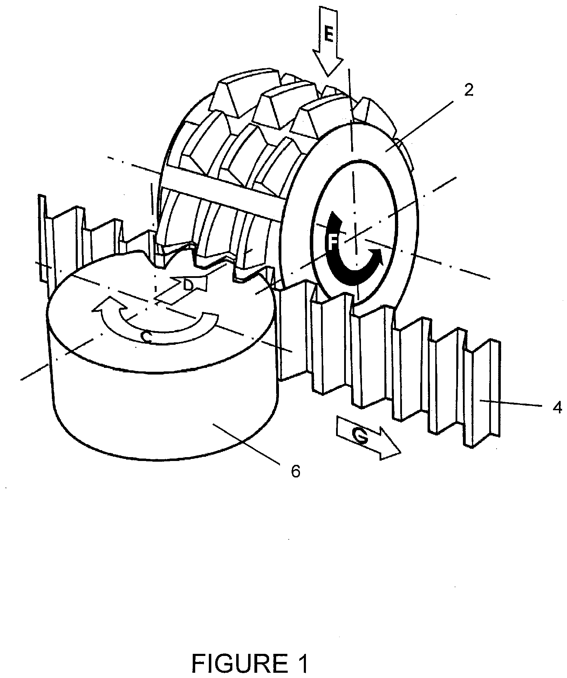

Cylindrical hobs are used for the manufacture of external cylindrical gears, such as spur gears, helical gears and worm gears. The manufacture of internal gears is not possible using a cylindrical hobbing tool due to mutilation left and right to the center line. The profile of a cylindrical hob is a trapezoid which reflects the pressure angle and module (depth and spacing) of the part to be manufactured and is known as a "reference profile". The reference profile can be observed in a plane through the center of the hob in an axial plane (e.g. a horizontal plane in Figure 1). The axes directions of the hob and the work in the case of spur gear manufacturing are perpendicular or slightly inclined about an angle, which is the same or similar magnitude than the lead angle of the hob teeth.

In case of helical gears, the hob axis is inclined to the work axis by the value of the helix angle with the possible addition or subtraction of the hob lead angle (depending on the lead direction). One hob revolution (in case of a single start hob) requires a shift of the virtual generating rack in direction "G" by one pitch. If, for example, an external cylindrical work gear is positioned on the opposite side of the rack than the hob, and if this work gear is "engaged" with the virtual generating rack, then the hob will cut involute teeth onto the work gear blank while it rotates (direction F). The work gear has to rotate one pitch during each hob revolution (one start hob). Because the generating rack has to shift in direction "G" while the hob rotates, the work gear will also have to rotate in direction "C" in order generate the involute profile and also in order to work its way around the work gear and cut all the teeth (slots) on the work gear circumference.

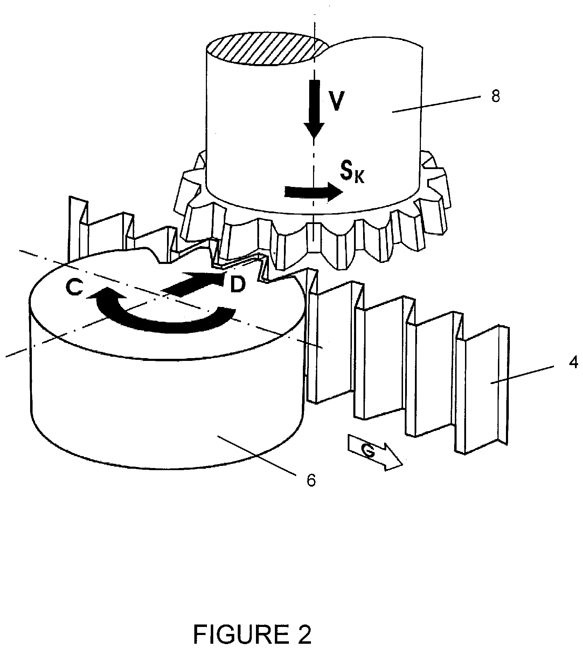

Shaping is a method where a cylindrical pinion shaped cutter strokes axially (V in Figure 2) while it is engaged with an external or internal work piece. Every forward stroke removes material while simultaneously to the stroking a continuous index rotation between shaper cutter and work piece is performed. While the shaper cutter rotates one pitch (rotation $S_k$), the generating rack shifts one pitch in direction "G" and the work gear rotates one pitch in rotational direction "C" (in Figure 2). Every reverse stroke is unproductive, which makes shaping a rather slow process. Shaping has its strength in the machining of internal gears (which is not possible with hobbing) or gears which allow no over-travel clearance behind the end of the teeth to be machined (also often not possible with hobbing).

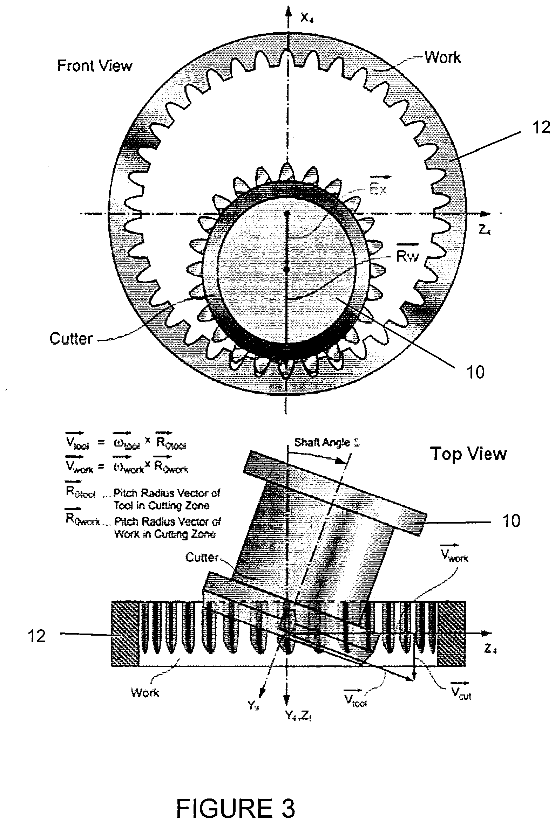

Power skiving is a method which utilizes the relative motion between the work and a disk shaped cutter with peripheral cutting teeth. The relative motion is created with the inclination angle between work and cutter (see shaft angle $\Sigma$ in Figure 3). The cutting teeth are engaged in the slots of the work piece while cutter and work piece rotate and create the velocities $V_{tool}$ and $V_{work}$ in Figure 3. The difference between the two peripheral velocities is utilized as cutting velocity $V_{cut}$.

US 2013/309026 discloses a tool for efficiently cutting a face gear, the tool having a helical orientation of teeth with a cutting front perpendicular tot he tool axis of rotation. US 2002/015622 teaches a broaching tool wherein the direction of tooth spaces of the teeth in a longitudinal extending helical alignment and the direction of the gullets of the teeth in a circumferentially extending helical direction are both oriented to the same hand of helix angle.

## Summary of the Invention

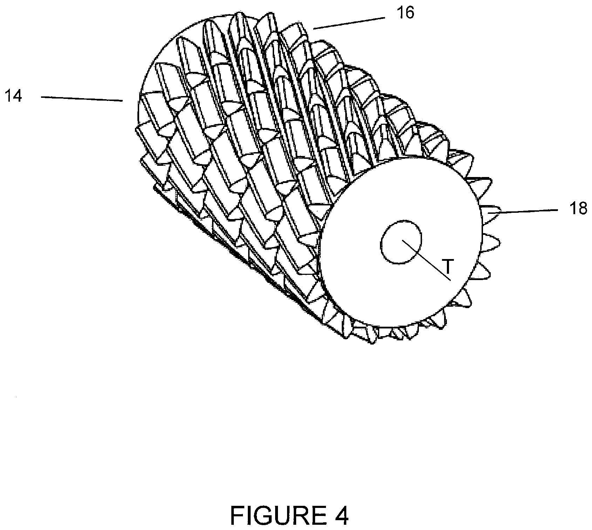

The invention provides an axial hob in accordance with claim 1 and relates to an axial hob with cutting teeth which are arranged around a cylinder in a helical pattern. The cutting front is perpendicular to the helix. The re-grindable blade thickness is oriented in the direction of the helix lead direction (e.g. Figure 4). While the tool rotates, the active cutting front changes from one blade to the next which, depending on the hand of rotation, is an advanced or retracted position. However, the rotation will not give the individual blades a chip removing motion but only position the following blade in an advanced or retracted location, e.g. in a gear slot to be machined. The invention also relates to a method of manufacturing a gear according to claim 10.

## Brief Description of the Drawings

Note: Figures 1 to 3 show background prior arts which are not part of the claimed subject matter.

Figure 1 shows a three dimensional graphic of a cylindrical hob, a virtual generating rack and a work gear.

Figure 2 shows a three dimensional graphic of a shaper cutter, a virtual generating rack and a work gear.

Figure 3 shows the orientation of a power skiving cutter and internal gear, front and top view.

Figure 4 shows the three dimensional view of an axial hob with multi-revolution cutting teeth.

Figure 5(a) shows an end view and Figure 5(b) shows a side (lengthwise) view of a helical axial hob.

Figure 6 shows the three dimensional view of an axial zero lead angle hob.

Figure 7 shows the three dimensional representation of a mounted multi-disk hob.

Figure 8 shows the three dimensional representation of a mounted stick blade hob.

Figure 9(a) shows the orientation between tool and work for the power skiving of an external gear with an axial hob. The only feed direction is a radial infeed.

Figure 9(b) shows the orientation between tool and work for the power skiving of an external gear with an axial hob. The feed is in axial hob direction.

Figure 10 shows the orientation between tool and work for the power skiving of an external gear with an axial hob. The feed direction of the hob is in axial work gear direction.

Figure 11 shows the orientation between tool and work for the power skiving of an internal gear with an axial hob. The feed direction of the hob is radial in direction.

Figure 12 shows the orientation between tool and work for the power skiving of an internal gear with an axial hob. The feed direction of the hob is in the axial hob direction.

Figure 13 shows the orientation between tool and work for the power skiving of an internal gear with an axial hob. The feed direction of the hob is in the axial work gear direction.

Detailed Description of the Preferred Embodiment

The details of the invention will now be discussed with reference to the accompanying drawings which illustrate the invention by way of example only. In the drawings, similar features or components will be referred to by like reference numbers.

Although references may be made below to directions such as upper, lower, upward, downward, rearward, bottom, top, front, rear, etc., in describing the drawings, there references are made relative to the drawings (as normally viewed) for convenience. These directions are not intended to be taken literally or limit the present invention in any form unless specified.

Figure 1 shows a three dimensional graphic of a cylindrical hob 2 and virtual generating rack 4. The hob simulates the profile of the generating rack in a horizontal plane (the drawing shows the top profile plane of the rack), which in the simple case shown in Figure 1 contains the axis of rotation of the hob. If the hob rotates (as indicated by "F"), the generating rack will move in direction "G". In case of a hob with one start, one revolution will shift the rack one pitch in direction G. In order to cut a gear with the face width of the rack in Figure 1, the hob has to move in direction "E", until the horizontal plane (which includes the hob axis) reaches the bottom profile plane of the rack. Thus, the hob teeth show the rack profile on their front face, if the front face coincides with an axial plane. Each hob revolution, which shifts the rack by one pitch, also requires the rotation of the work piece 6 by one pitch (rotation C). In such a case all major cutting forces are tangential to the hob and directly translate into the torque which is required to rotate the hob.

Figure 2 shows a three dimensional graphic of a shaper cutter 8 and a virtual generating rack. While the shaper cutter rotates (as indicated by $S_k$) around its axis, the generating rack shifts in direction "G" and the involute profile of the shaper cutter teeth will form the trapezoidal reference profile of the rack. Although the described cutter rotation and rack shift will form the profile of the rack, it will not provide any cutting action. The shaper cutter teeth have the involute profile which is required to form the straight profile of the rack teeth in a radial plane (perpendicular to the axis of the shaper cutter). The stroke motion "V" in axial direction of the shaper cutter is required to introduce a cutting action and is also necessary to cut the face width of a gear. If the length of the stroke is equal to the width of the rack, then it is possible to cut a cylindrical gear with the same face width as shown in Figure 2. While the generating rack shifts in direction "G" e.g. by one pitch, the work which is engaged with the rack has to also rotate by one pitch (rotation C). In the case shown in Figure 2, all major cutting forces are directed in axial shaper cutter direction.

Figure 3 shows the orientation of a power skiving cutter 10 and an internal gear 12, front and top view. While the cutter rotates, the involute profiles of its teeth form the straight profiles of a virtual generating rack (not shown in Figure 3). The rotation of the cutter shifts the generating rack sideways (like in Figure 2). Covering the width of the generating rack teeth (equivalent with the face width of a cylindrical gear to be cut) requires a feed motion of the cutter in axial work gear direction ($Y_4$, $Z_4$).

In contrast to the shaper cutter 8 in Figure 2, the cutting action is not generated by axial stroking but instead by the relative motion between the skiving cutter 10 and the work gear 12 (during the synchronized rotation of both) which is directed in lead direction of the work gear teeth. Thus, the cutting velocity $V_{cut}$ is a function of the cutter RPM (or angular velocity $\omega_{tool}$) and the inclination angle $\Sigma$:

$$V_{cut} = \omega_{tool} * \sin\Sigma$$

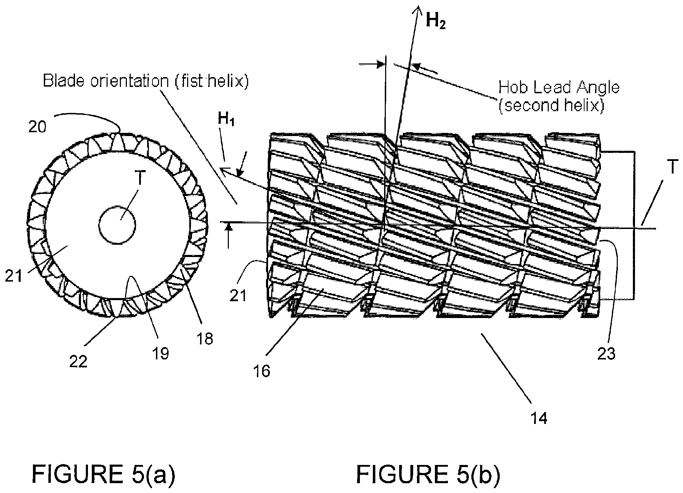

Figure 4 shows a three dimensional view of an axial hob 14 with multi-revolution cutting teeth 16 rotatable about a hob axis T. The teeth (i.e. cutting blades) 16 of the hob shaped cutter 14 are oriented in a first helix direction $H_1$ (i.e. at a first helix angle) where the blades are grouped along a second helix direction $H_2$ (i.e. at a second helix angle) on the periphery of a cylinder 19 (see Figures (5a) and (5b)) which has the effect of winding the blades along the length of the cylindrical hob. The hob 14 extends a certain axial length between a pair of axially opposed ends, first end 21 and second end 23. The actual length of the axial hob is determined based on factors such as the particular hobbing machine, workpiece dimensions, process parameters, etc., as would be understood by the skilled artisan. The first helix angle is measured with respect to the hob axis T and the second helix angle is measured with respect to a line perpendicular to the hob axis T as seen in Figure 5(b). The first helix is analogous to the helix angle of a cylindrical gear. The second helix has a fixed lead angle (i.e. second helix angle) which threads the blades along the width of the cylinder 19. The direction of the second helix is preferably perpendicular to the direction of the first helix which will create blade front faces 18 (i.e. cutting faces) with equal side rake angles (of zero degrees) on the left and right cutting profile. Preferably, the blades have an involute profile (Figures 4 and 5a) which is derived from the normal tooth profile of a cylindrical gear to be manufactured.

The blades 16 may be face ground which reduces the thickness of the blades until the end of the hob life. Thus, the cutting edges of the blades 16 generally face one of the opposed ends, which, for Figures 5(a) and 5(b), is end 21. Thus, the direction of cutting is generally in the axial direction T or at some defined angle with respect to axis T. As the hob is front face sharpened in the direction of blade thickness, the hob outer diameter is reduced which has to be considered in the machine settings after each sharpening. The outer diameter is reduced due to the fact that top relief and side relief in such types of blades are created by a radial profile relief motion of the manufacturing machine while grinding each blade from the top. The actual hob diameter is measured from the toplands (i.e. top surface) of two opposite blades (e.g. 20, 22).

While the tool rotates, the active cutting front changes from one blade to the next, which is dependent on the hand of rotation in an advanced or retracted position. However, rotation alone will not give the individual blades a chip removing motion but only position the following blade in an advanced or retracted location e.g. in a gear slot to be machined

If the axial hob is used in a power skiving process, then the axis of the tool and the axis of the work have to be inclined to one another. As with conventional power skiving, the chip removing surface speed has to be created by this axis inclination (see shaft angle $\Sigma$ in Figure 3). The major cutting forces in skiving are directed in axial work gear direction.

Figure 5(a) shows an axial front end view and Figure 5(b) shows side (lengthwise) view of a helical axial hob 14. The direction of the first helix (blade orientation) and second helix (front face locations of blades) are indicated in Figure 5(b). Sharpening of such a hob can be performed with a thin grinding wheel which is inclined to the second helix angle. During the sharpening, the hob can rotate while the grinding wheel follows the helix with a motion in the direction of the hob axis T:

$$\text{Grinding wheel motion} = (\text{Angular cutter velocity}) * (\text{Pitch radius of cutter})$$

As previously mentioned, the blades 16 can be face ground which reduces the thickness of the blades until the end of the hob life. In the direction of the blade thickness, the magnitude of the outer diameter (measured between the toplands of two opposite blades) diminishes due to radial profile relief which causes top relief and side relief). Therefore, as the hob is front face sharpened, its diameter is reduced and this has to be considered in the machine settings after each sharpening.

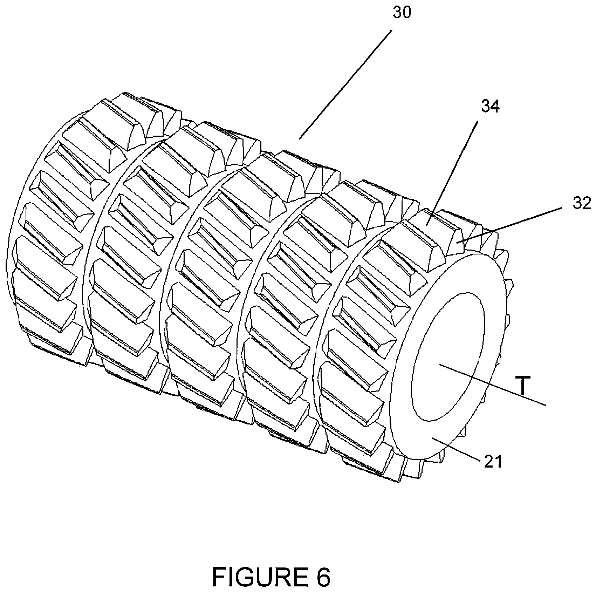

The hob may be manufactured with a ring blade orientation (Figure 6), which means the blades are not oriented along a helix but in true circles (second helix angle is zero). The individual blades are oriented in a first helix direction similar to the helical hob. In order to arrange the entire hob cylinder with cutting blades, a certain number of layers of cutting blade rings are oriented on the hob base cylinder.

Figure 6 shows the three dimensional view of an axial zero lead angle hob 30. The previous descriptions of Figures 4 and 5 apply except that with this embodiment, the second helix angle is zero resulting in hob lead direction $H_2$ being perpendicular to hob axis T. If hob 30 is manufactured from a single piece of material (e.g. high speed steel or carbide) and has to be re-sharpened with front face surfaces 32 perpendicular to the first helix direction, then each blade (tooth) 34 has to be sharpened in a single setup with a small diameter grinding wheel so as to avoid interference with surrounding blades.

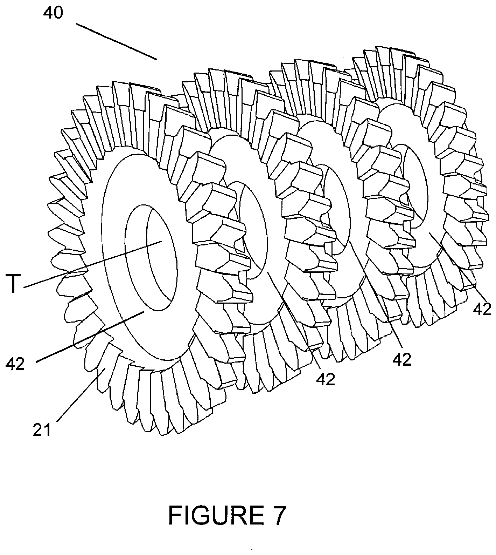

Figure 7 shows the three dimensional representation of an axial hob comprising a plurality of cutting disks 42. While four disks are shown, the invention contemplates any number of two or more disks. The mounted disk hob has the same features as the zero lead angle hob 30 (Figure 6). It can be disassembled for re-sharpening and in the case of broken or chipped teeth, a single disk can be replaced. Manufacturing of a mounted multi disk hob is less complicated than the manufacture of a zero lead angle hob because of the smaller individual parts of carbide or high speed steel. The angular orientation of the mounted disks has to be such that the blades follow the first helix correctly from one disk to the next.

The axial hob of Figure 7 represents a very cost effective way of creating an axial hob. Such a hob is very flexible because it can be mounted to a desired specification, considering the width of a work piece as well as any over travel conditions. Manufacturing of the single disks is more cost effective than manufacturing an entire hob from one solid piece of HSS or carbide. In case of non-uniform wear, cutting edge chipping or even breakage of teeth, it is possible to rearrange the disks (along the cutting direction) or to replace single disks. The multitude of disk cutters has to be mounted such that the rotational orientation of the blades is changed by:

$$\text{(inclination between tool and work)} * \text{(disk spacing distance)} /$$

$$\text{(hob pitch diameter)} * 180°/\pi$$

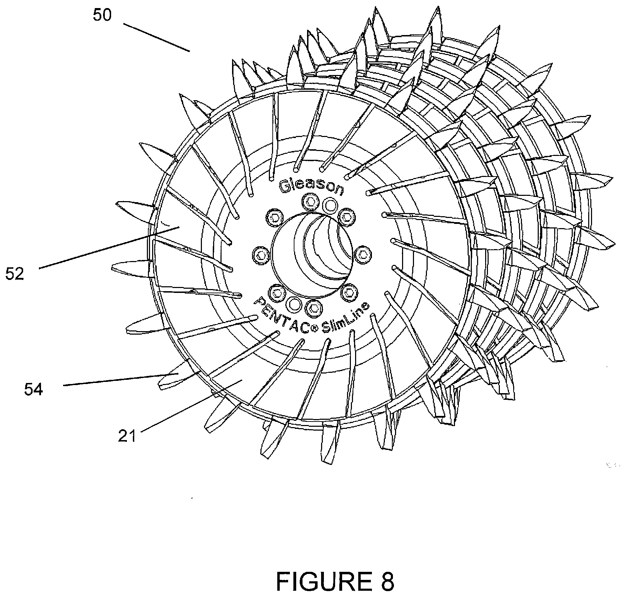

Figure 8 shows the three dimensional representation of an axial hob 50 comprising a plurality of single disk cutters 52 (four shown) which are each equipped with stick blades 54. The stick blades can be removed and re-sharpened individually. A broken blade can be exchanged with lower cost compared to single disk or solid hobs. The angular orientation of the mounted disks has to be such that the blades follow the first helix (i.e. blade orientation) correctly from one disk to the next.

Axial hob 50 also represents a cost effective and modular way of creating an axial hob by mounting of one or more peripheral cutters behind each other and create a zero lead angle hob. Axial hob 50 is very flexible because it can be mounted to a desired specification, considering the width of a work piece as well as any over travel conditions. In case of non-uniform wear, cutting edge chipping or even breakage of teeth, it is possible to exchange single blades. The multiple cutters 52 have to be mounted such that the rotational orientation of the blades is changed by:

$$\text{(inclination between tool and work)} * \text{(disk spacing distance)} /$$

$$\text{(hob pitch diameter)} * 180°/\pi$$

In order to generate a chip removing motion, the inventive axial hob can be used like a shaper cutter in a shaping process. The advantage is that during the axial stroke, an infeed motion in slot depth direction can be introduced which would allow cutting of the entire slot depth in one single stroke. A roll motion between cutter and work is still required in order to generate the involute profile. After one work piece revolution, the work is either finished or roughed out. In case of high gear quality and high surface finish requirement, a second work revolution with a finishing stroke can be applied. Additional work revolutions each with a respective finishing stroke are also contemplated. For finishing, the cutter may be repositioned in the axial direction to utilize a fresh section of the tool which is used only for finishing.

In order to generate a chip removing motion, the axial hob can be used like a broach. While the hob performs a broaching stroke (similar to shaping), the hob is set to whole depth and rotates (with the correct ratio with the work) such that in one single stroke, an internal cylindrical gear is finished. For high surface finish and lower cutting forces, a gear can be finished in several strokes. In the case of a semi-broaching process, the teeth should be staggered from one end of the hob to the other end of the hob. Thus, the diameter of the hob increases from the side of the hob where cutting begins (front end) to the side of the hob where the cutting ends (back end).

If the axial hob is used in a power skiving process, the axis of the tool and the axis of work have to be inclined.

As with conventional power skiving, the chip removing surface speed has to be created by this axis inclination (see Figure 3).

The inventive axial hob is suitable for the production of gears on machines including, but not limited to, gear shaping machines, power skiving machines, multi-axis free-form bevel and hypoid gear machines (e.g. US 6,712,566) and five-axis machining centers.

Example 1:

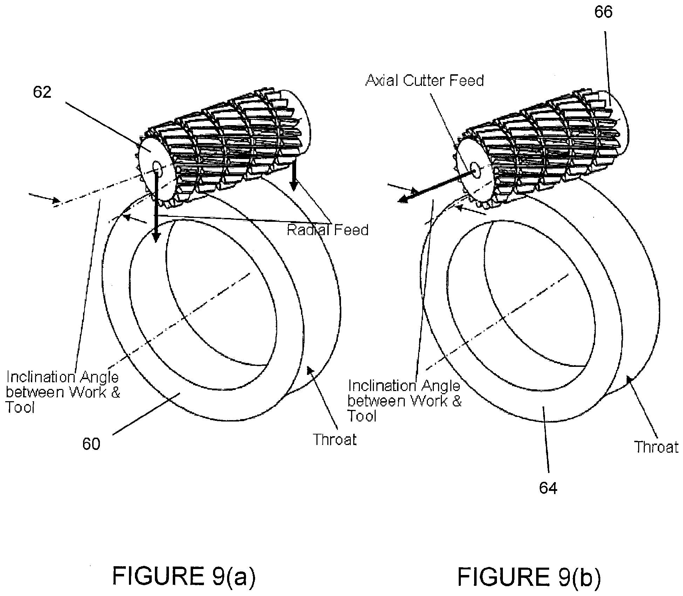

An axial hob is positioned with the crossing point of the hob and work axis in the middle of the face width of the work (on the outside of the work) and the tool is fed into the work material by feeding in the radial work direction (towards the inside). A generated "cylindrical" gear having a throat is formed. The enveloping cylinder of the hob blade tips has the shortest distance to the centerline of the work gear in the middle of the face width (see Figure 9(a)). This distance increases in both directions towards the ends of the cylindrical work gear and therefore form an enveloping or throated gear.

Figure 9(a) shows the orientation between tool and work for the power skiving of an external gear 60 with an axial hob 62. The feed direction is a radial infeed. The geometry of the generated external cylindrical gear shows a throat in the pitch element. The pitch element is not cylindrical but a hyperboloid.

Example 2:

An axial hob is positioned with the crossing point of the hob and work axis in the middle of the face width of the work and the hob is shifted along its axis to the outside of the work gear in order to clear the work. In this example, the shifting is an axial feed motion applied in the direction of the cutting tool axis (see Figure 9(b)). Also in this example, the generated "cylindrical" gear would have a throat. The enveloping cylinder of the hob blade tips has the shortest distance to the centerline of the work gear in the middle of the face width. This distance increases as in both directions towards the ends of the cylindrical work gear which forms the throat.

Figure 9(b) shows the orientation between tool and work for the power skiving of an external gear 64 with an axial hob 66. The feed is in axial hob direction. With the axial feed direction, the resulting geometry of the generated external cylindrical gear is a throat in the pitch element. The pitch element is not cylindrical but a hyperboloid.

Example 3:

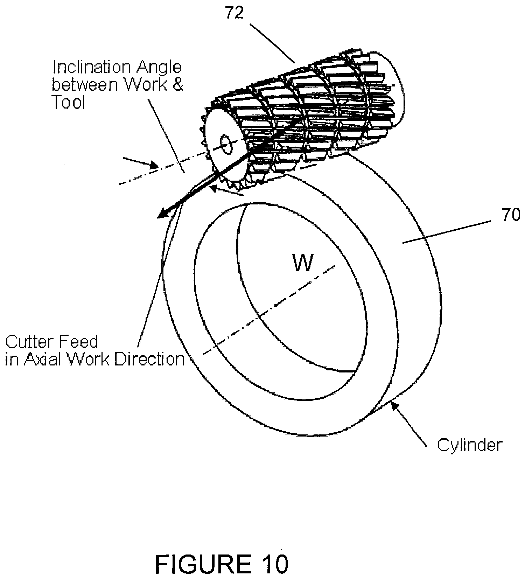

Figure 10 shows the orientation between tool and work for the power skiving of an external gear 70 with an axial hob 72. The feed direction of the hob is in the direction of the axis W of the work gear 70. With this feed direction, a complete roll out of the pitch element is achieved. The resulting pitch element is cylindrical.

The hob 72 is positioned such that the axes crossing point is at a known distance from the face on one side of the work gear 70 (on the outside of the work) and an axial feed motion is applied in the direction of the work axis. As a result, the shortest distance between the enveloping cylinder of the hob blade tips and the work gear axis will sweep along the face width while the feed motion moves the hob in direction of the work gear axis. The ratio, i, between the work rotation and the hob rotation is calculated from:

$$i = z_{hob}/z_{work}$$

where:

$z_{hob}$ = number of blade "starts" on the hob
$z_{work}$ = number of teeth on the workpiece

$$RPM_{hob} = RPM_{work} * i$$

In order to generate a correct involute profile and a correct lead angle, the work (or the hob) have to perform a superimposed differential rotation $\Delta\varphi$. The differential rotation $\Delta\varphi$ for the hob is calculated:

$$\Delta\varphi = 2 * (\text{axial feed amount}) * \sin(\text{helix angle of workpiece}) / (\text{pitch diameter})$$

The differential rotation Δφ becomes zero in case the work gear is a spur gear. The generated pitch element is cylindrical in this case.

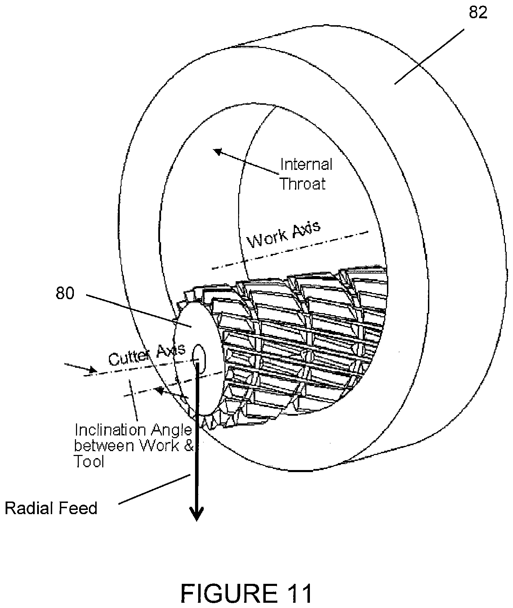

Figures 11 - 13 (Examples 4-6) show the orientation between an axial hob and a work piece for the power skiving of an internal gear with an axial hob. The feed direction of the hob is either radial, in axial hob direction or in axial work gear direction. The radial plunge and the feed axially to the hob axis generate a hyperbolic pitch element (throat pitch element). Such an internal gear might be used for a crossed axis arrangement, where the internal gear meshes with a cylindrical pinion.

Example 4:

With reference to Figure 11, an axial hob 80 is positioned with the crossing point of the hob (cutter) axis and work piece axis in the middle of the face width of the work piece 82 (on the inside of the work) and the hob 80 is fed in the radial work direction into the work (towards the outside). A throated internal gear is created.

Example 5:

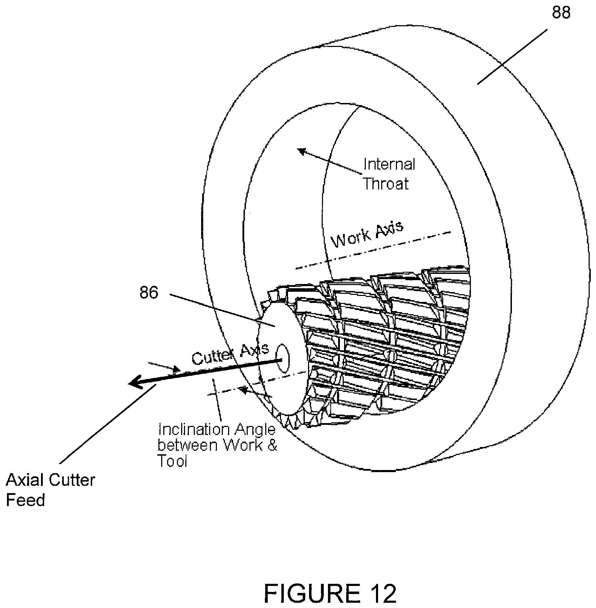

With reference to Figure 12, an axial hob 86 is positioned such that the crossing point of the hob (cutter) axis and workpiece axis is at a known distance from the face on one side of the work gear 88 (on the inside of the work) and an axial feed motion is applied in the direction of the hob axis. A throated internal gear is created.

Example 6:

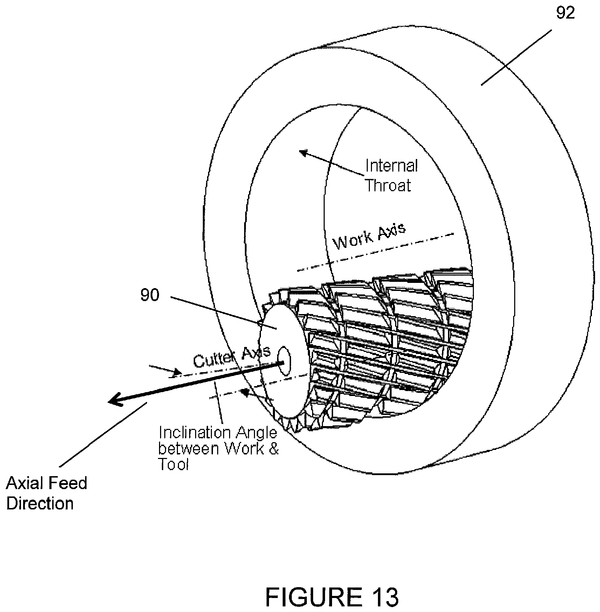

With reference to Figure 13, an axial hob 90 is positioned such that the crossing point of the hob and workpiece axes is at a known distance from the face on one side of the work gear 92 (on the inside of the work) and an axial feed motion is applied in the direction of the work axis. In this case, the work gear will be mutilated by the two ends of the hob and the work gear will be destroyed.

Applying a feed which in the direction of the work gear axis will mutilate the internal gear to the extent that the teeth are removed (resulting in a root cylinder blank). The mutilation becomes larger as the length of the hob becomes greater.

While the invention has been described with reference to preferred embodiments it is to be understood that the invention is not limited to the particulars thereof. The present invention is intended to include modifications which would be apparent to those skilled in the art to which the subject matter pertains without deviating from the scope of the appended claims.

**Claims**

1. An axial hob (14) for machining gears and other toothed articles, said axial hob being cylindrically shaped and comprising:

   a length, a diameter and a pair of axially opposed ends (21, 23), an axis (**T**) of rotation extending the length of said hob with said axial hob being rotatable about said axis,
   a plurality of cutting teeth (16) arranged about said hob, said teeth being oriented in a first direction (H$_1$) defined by a first helix angle with respect to said axis of rotation,
   wherein each of said cutting teeth includes a cutting face (18) and wherein all cutting faces are oriented toward one of said axially opposed ends,
   **characterized in that** the axial hob is either configured to perform a power skiving process as machining or configured to perform a shaping process as machining, and **in that** the cutting face forms a cutting front perpendicular to the helix defined by said first helix angle.

2. The axial hob of claim 1 further comprising said cutting teeth being oriented in a second direction (H$_2$) defined by a second helix angle with respect to a line perpendicular to said axis of rotation.

3. The axial hob of claim 2 wherein said first direction and said second are perpendicular to one another.

4. The axial hob of claim 2 wherein said second helix angle equals zero degrees.

5. The axial hob of claim 1 wherein said hob comprises a plurality of cutting disks (42; 52) each of which having cutting teeth arranged about the periphery thereof, said cutting disks being serially arranged in the axial direction and being rotationally oriented with respect to one another whereby the cutting teeth of all disks are collectively arranged to be oriented in a first direction with respect to said axis of rotation so as to define said first helix angle.

6. The axial hob of claim 1 wherein each cutting face comprises a left cutting profile and a right cutting profile.

7. The axial hob of claim 6 wherein said left cutting profile and said right cutting profile are each of a shape in the form of an involute.

8. The axial hob of claim 6 further comprising equal side rake angles on the left and right cutting profiles.

9. The axial hob of claim 1 wherein each cutting face is formed on a replaceable cutting blade (54).

10. A method of manufacturing a gear from a gear workpiece with an axial hob (14), said gear workpiece having an axis of rotation, said method comprising:

   providing an axial hob, said axial hob being cylindrically shaped and comprising a length, a diameter and a pair of axially opposed ends (21, 23), an axis (T) of rotation extending the length of said hob with said axial hob being rotatable about said axis, a plurality of cutting teeth (16) arranged about said hob, said teeth being oriented in a first direction ($H_1$) defined by a first helix angle with respect to said axis of rotation, wherein each of said cutting teeth includes a cutting face (18) and wherein all cutting faces are oriented toward one of said axially opposed ends, the cutting face forming a cutting front perpendicular to the helix defined by said first helix angle, rotating said hob and said gear workpiece about their respective axes of rotation at a predetermined ratio, orienting said axial hob axis of rotation at an inclination angle ($\Sigma$) with respect to the gear workpiece axis for a power skiving process or parallel to the gear workpiece axis for a shaping process, moving said hob across an outer surface of said gear workpiece in a feed direction in the direction of the hob axis or in the radial direction with respect to the gear workpiece axis.

**Patentansprüche**

1. Axiale Walzfräse (14) zum Bearbeiten von Zahnrädern und anderen mit Zähnen versehenen Artikeln, wobei die axiale Walzfräse zylindrisch geformt ist und Folgendes umfasst:

   eine Länge, einen Durchmesser und ein Paar von axial gegenüber liegenden Enden (21, 23), wobei eine Drehachse (T) sich entlang der Länge der Walzfräse erstreckt und die axiale Walzfräse um die Achse herum drehbar ist,
   eine Vielzahl von Schneidzähnen (16), die um die Walzfräse herum angeordnet sind, wobei die Zähne in einer ersten Richtung ($H_1$) ausgerichtet sind, die durch einen ersten Helixwinkel in Bezug auf die Drehachse definiert wird,
   wobei jeder Schneidzahn eine Schneidfläche (18) enthält und wobei alle Schneidflächen zu einem der axial gegenüber liegenden Enden hin ausgerichtet sind,
   **dadurch gekennzeichnet, dass** die axiale Walzfräse entweder konfiguriert ist, um einen Wälzschälprozess als Bearbeitung durchführen, oder konfiguriert ist, um einen Wälzstossprozess als Bearbeitung durchführen, und dadurch, dass die Schneidfläche eine Schnittfront bildet, die senkrecht zu der durch den ersten Helixwinkel definierten Helix ist.

2. Axiale Walzfräse nach Anspruch 1, weiterhin umfassend, dass die Schneidzähne in einer zweiten Richtung ($H_2$) ausgerichtet sind, die durch einen zweiten Helixwinkel in Bezug auf eine senkrecht zu der Drehachse verlaufende Linie definiert wird.

3. Axiale Walzfräse nach Anspruch 2, wobei die erste Richtung und die zweite Richtung zueinander senkrecht sind.

4. Axiale Walzfräse nach Anspruch 2, wobei der zweite Helixwinkel Null Grad beträgt.

5. Axiale Walzfräse nach Anspruch 1, wobei die Walzfräse eine Vielzahl von Schneidscheiben (42; 52) umfasst, deren Schneidzähne um ihren Umfang herum angeordnet sind, wobei die Schneidscheiben in der axialen Richtung in Reihe angeordnet sind und in Bezug aufeinander drehbar ausgerichtet sind, wodurch die Schneidzähne aller Scheiben gemeinsam angeordnet sind, um in einer ersten Richtung in Bezug auf die Drehachse ausgerichtet zu sein, um den ersten Helixwinkel zu definieren.

6. Axiale Walzfräse nach Anspruch 1, wobei jede Schneidfläche ein linkes Schneidprofil und ein rechtes Schneidprofil umfasst.

7. Axiale Walzfräse nach Anspruch 6, wobei das linke Schneidprofil und das rechte Schneidprofil jeweils in Form einer Evolvente vorliegen.

8. Axiale Walzfräse nach Anspruch 6, weiterhin umfassend gleiche seitliche Spanwinkel an den linken und rechten Schneidprofilen.

9. Axiale Walzfräse nach Anspruch 1, wobei jede Schneidfläche an einer austauschbaren Schneidklinge (54) ausgebildet ist.

10. Verfahren zur Herstellung eines Zahnrads aus einem Zahnradwerkstück mittels einer axialen Wälzfräse (14), wobei das Zahnradwerkstück eine Drehachse aufweist, wobei das Verfahren Folgendes umfasst:

Bereitstellen einer axialen Walzfräse, wobei die axiale Walzfräse zylindrisch geformt ist und eine Länge, einen Durchmesser und ein Paar von axial gegenüber liegenden Enden (21, 23) umfasst, wobei eine Drehachse (T) sich entlang der Länge der Walzfräse erstreckt und die axiale Walzfräse um die Achse herum drehbar ist, wobei eine Vielzahl von Schneidzähnen (16), um die Walzfräse herum angeordnet ist, wobei die Zähne in einer ersten Richtung ($H_1$) ausgerichtet sind, die durch einen ersten Helixwinkel in Bezug auf die Drehachse definiert wird, wobei jeder Schneidzahn eine Schneidfläche (18) enthält und wobei alle Schneidflächen zu einem der axial gegenüber liegenden Enden hin ausgerichtet sind, wobei die Schneidfläche eine Schnittfront bildet, die senkrecht zu der durch den ersten Helixwinkel definierten Helix ist,
Drehen der Walzfräse und des Zahnradwerkstücks um ihre jeweiligen Drehachsen bei einem vorbestimmten Verhältnis,
Ausrichten der Drehachse der axialen Walzfräse in einem Neigungswinkel ($\Sigma$) in Bezug auf die Achse des Zahnradwerkstücks für einen Wälzschälprozess oder parallel zu dem Zahnradwerkstück für einen Wälzstossprozess,
Bewegen der Walzfräse über eine Außenfläche des Zahnradwerkstücks in einer Zuführrichtung in der Richtung der Achse der Walzfräse oder in der radialen Richtung in Bezug auf die Achse des Zahnradwerkstücks.

**Revendications**

1. Fraise-mère axiale (14) pour l'usinage de roues dentées et autres articles dentés, ladite fraise-mère axiale étant de forme cylindrique et présentant :

une longueur, un diamètre et une paire d'extrémités (21, 23) axialement opposées, un axe (T) de rotation s'étendant sur la longueur de ladite fraise-mère, ladite fraise-mère axiale pouvant tourner sur ledit axe, et
une pluralité de dents de coupe (16) agencées sur le pourtour de ladite fraise-mère, lesdites dents étant orientées dans une première direction ($H_1$) définie par un premier angle d'hélice relativement audit axe de rotation ;
chacune desdites dents de coupe présentant une face de coupe (18) et toutes les faces de coupe étant orientées vers une desdites extrémités axialement opposées,
**caractérisée en ce que** ladite fraise-mère axiale est soit conçue pour réaliser un processus de power skiving pour l'usinage ou conçu pour réaliser un processus de taillage outil pignon, et **en ce que** la face de coupe forme un front de coupe perpendiculaire à l'hélice définie par ledit premier angle d'hélice.

2. Fraise-mère axiale selon la revendication 1, dans laquelle en outre lesdites dents de coupe sont orientées dans une deuxième direction ($H_2$) définie par un deuxième angle d'hélice relativement à une ligne perpendiculaire audit axe de rotation.

3. Fraise-mère axiale selon la revendication 2, dans laquelle ladite première et ladite deuxième direction sont perpendiculaires l'une à l'autre.

4. Fraise-mère axiale selon la revendication 2, dans laquelle ledit deuxième angle d'hélice est de zéro degré.

**5.** Fraise-mère axiale selon la revendication 1, comprenant une pluralité de disques de coupe (42 ; 52) chacune présentant des dents de coupe agencées sur sa périphérie, lesdits disques de coupe étant agencés en série dans la direction axiale et étant orientés en rotation les uns par rapport aux autres, moyennant quoi les dents de coupe de tous les disques sont agencées collectivement de façon à être orientées dans une première direction relativement audit axe de rotation de manière à définir ledit premier angle d'hélice.

**6.** Fraise-mère axiale selon la revendication 1, dans laquelle chaque face de coupe comprend un profil de coupe gauche et un profil de coupe droit.

**7.** Fraise-mère axiale selon la revendication 6, dans laquelle ledit profil de coupe gauche et ledit profil de coupe droit ont chacun la forme d'une développante.

**8.** Fraise-mère axiale selon la revendication 6, comprenant en outre des angles de coupe latéraux égaux sur les profils de coupe gauche et droit.

**9.** Fraise-mère axiale selon la revendication 1, dans laquelle chaque face de coupe est formée sur une lame de coupe (54) remplaçable.

**10.** Procédé de fabrication d'une roue dentée à partir d'une pièce à usiner à l'aide d'une fraise-mère axiale (14), ladite pièce à usiner présentant un axe de rotation, ledit procédé comprenant :

la mise à disposition d'une fraise-mère axiale, ladite fraise-mère axiale étant de forme cylindrique et comprenant une longueur, un diamètre et une paire d'extrémités (21, 23) axialement opposées, un axe (T) de rotation s'étendant sur la longueur de ladite fraise-mère axiale, ladite fraise-mère pouvant tourner sur ledit axe, et une pluralité de dents de coupe (16) agencées sur le pourtour de ladite fraise-mère, lesdites dents étant orientées dans une première direction ($H_1$) définie par un premier angle d'hélice relativement audit axe de rotation, chacune desdites dents de coupe présentant une face de coupe (18) et toutes les faces de coupe étant orientées vers une desdites extrémités axialement opposées, la face de coupe formant un front de coupe perpendiculaire à l'hélice définie par ledit premier angle d'hélice,
la mise en rotation de ladite fraise-mère et de ladite pièce à usiner sur leur axe de rotation respectif selon un rapport prédéterminé,
l'orientation de l'axe de rotation de ladite fraise-mère axiale selon un angle d'inclinaison ($\Sigma$) relativement à l'axe de la pièce à usiner pour un processus de power skiving ou parallèlement à l'axe de la pièce à usiner pour un processus de taillage outil pignon,
le déplacement de ladite fraise-mère sur une surface extérieure de ladite pièce à usiner dans une direction d'amenée dans la direction de l'axe de fraise-mère ou dans la direction radiale relativement à l'axe de la pièce à usiner.

FIGURE 1

FIGURE 2

Front View

$X_4$

Work

12

$\overrightarrow{Ex}$

$Z_4$

$\overrightarrow{Rw}$

Cutter

10

$$\overrightarrow{V_{tool}} = \overrightarrow{\omega_{tool}} \times \overrightarrow{R_{0tool}}$$

$$\overrightarrow{V_{work}} = \overrightarrow{\omega_{work}} \times \overrightarrow{R_{0work}}$$

$\overrightarrow{R_{0tool}}$ ... Pitch Radius Vector of Tool in Cutting Zone

$\overrightarrow{R_{0work}}$ ... Pitch Radius Vector of Work in Cutting Zone

Shaft Angle $\Sigma$

Top View

10

Cutter

$\overrightarrow{V_{work}}$

12

$Z_4$

Work

$Y_g$

$Y_4, Z_f$

$\overrightarrow{V_{tool}}$

$\overrightarrow{V_{cut}}$

# FIGURE 3

FIGURE 4

FIGURE 5(a)  FIGURE 5(b)

FIGURE 6

FIGURE 7

50

52

54

21

Gleason

PENTAC® SlimLine

FIGURE 8

FIGURE 9(a)                              FIGURE 9(b)

Inclination Angle
between Work &
Tool

72

70

W

Cutter Feed
in Axial Work Direction

Cylinder

FIGURE 10

82

Internal
Throat

Work Axis

80

Cutter Axis

Inclination Angle
between Work &
Tool

Radial Feed

## FIGURE 11

FIGURE 12

**FIGURE 13**

**EP 3 200 948 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130309026 A1
- US 2013309026 A
- US 2002015622 A
- US 6712566 B